(19) Europäisches Patentamt
European Patent Office
Office européen des brevets

(11) Publication number: 0 081 972
B1

# (12) EUROPEAN PATENT SPECIFICATION

(45) Date of publication of patent specification: 25.06.86

(21) Application number: 82306532.1

(22) Date of filing: 08.12.82

(51) Int. Cl.[4]: C 09 J 3/00, C 09 J 5/04, C 08 L 71/02, C 08 L 101/06 // C08F4/40

## (54) Two-part, two-tier cure adhesive composition.

(30) Priority: 11.12.81 IE 2922/81

(43) Date of publication of application: 22.06.83 Bulletin 83/25

(45) Publication of the grant of the patent: 25.06.86 Bulletin 86/26

(84) Designated Contracting States: BE CH DE FR GB IT LI NL SE

(56) References cited:
GB-A-1 544 006
US-A-4 007 323
US-A-4 180 640

(73) Proprietor: LOCTITE CORPORATION
705 North Mountain Road
Newington, Connecticut 06111 (US)

(72) Inventor: Drain, Kieran F.
11455 East Huffmann Road
Parma Heights Ohio 44130 (US)
Inventor: Martin, Francis R.
69 Templeogue Wood
Templeogue Dublin 12 (IE)

(74) Representative: Sommerville, John Henry et al
SOMMERVILLE & RUSHTON 11 Holywell Hill
St. Albans Hertfordshire, AL1 1EZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is directed to a two-part adhesive composition characterized by excellent gap-filling capabilities and cure-through-volume (CTV), and rapid curing, as well as a process for the adhesive bonding of surfaces therewith.

Two-part adhesive compositions are well known to ethylenically unsaturated free-radical curing adhesive systems. Heretofore, these adhesive compositions have required the use of solvents as carriers for their primer or accelerator systems. Usually the primer is coated on the surface prior to deposition or contact with the polymerizable part of the composition. The solvent carrying the primer is usually allowed to evaporate off the surface prior to contact with the polymerizable part. Typical examples of patents in the field are U.S. Nos. 4,081,308 and 4,052,244, both to M. Skoultchi. These patents present two-part adhesive compositions wherein the first part is a polymerizable acrylic monomer and the second part is an accelerator in a solvent carrier. Other U.S. Patents which are two-part adhesive compositions containing solutions of elastomeric polymers in vinyl monomers are Nos. 3,810,407; 3,962,372; 4,112,013; 4,118,435; 3,994,764; 3,832,274 and 4,138,449. These systems, which are used in the manufacture of tough acrylics, also employ solvent carriers for the accelerator part of the adhesive composition. Anaerobic compositions have effectively used primers and accelerators as a means of treating a surface prior to deposition of the polymerizable portion of the adhesive composition. Primers were traditionally kept separate from the adhesive composition and dissolved in a solvent carrier, such as trichloroethane and the like. Examples of anaerobic compositions which use, albeit optionally, solvent solutions of primers for accelerating cure are U.S. Patent Nos. 2,895,950; 3,043,820 and 3,218,306, among others.

U.S. Patent Application No. 386,491, filed June 9, 1982 to John Stewart, discloses a solventless two-part composition comprising, (A) as a first part a resin system comprising (i) at least one polymerizable acrylate or methacrylate material; (ii) an initiator of free-radical polymerization selected from the gorup consisting of peroxides, hydroperoxides, peresters, persalts and peracids; (iii) optionally a sulfimide; and (iv) optionally a hydrazine derivative; and (B) as a second part a resin system comprising, (i) at least one polymerizable acrylate or methacrylate material; (ii) a solventless accelerator system comprising a transition metal salt; and (iii) optionally an amine co-accelerator with said transition metal salt, wherein the resin systems of each part are substantially matched in viscosity and rheology.

This invention relates to two-part adhesive compositions which are characterized by rapid cure and excellent cure through volume, e.g., gap-filling ability, on active as well as inactive surfaces. This invention also relates to a process of bonding surfaces together whereby the adhesive composition employed is used.

More specifically, this invention relates to an adhesive composition comprising,

(A) as a first part a resin system comprising,

(i) at least one polymerizable acrylate or methacrylate material;

(ii) an initiator system of free-radical polymerization comprising

(a) a compound selected from the group consisting of peroxides, hydroperoxides, peresters, persalts and peracids, exclusive of aromatic acyl peroxides; and

(b) at least one aromatic acyl peroxide;

(iii) optionally an acid with a pKa not exceeding 6; and

(B) as a second part a resin system comprising,

(i) at least one polymerizable acrylate or methacrylate material;

(ii) an accelerator system comprising at least one amine; and optionally either a sulfimide, or an hydrazine derivative, or both,

wherein the resin systems of both parts are substantially matched in viscosity and rheology.

The instant invention discloses a novel two-part adhesive composition which obtains unique advantages from the employment of two cure system, both of which are partially contained in each part of the two-part composition. According to the invention, traditional free-radical cure systems of anaerobically curable compositions is supplemented by a second cure system which is generally used to cure polyester-type materials.

The unique two-tier cure system allows for cure-through-volume (CTV) heretofore not obtainable with traditionally anaerobic curable systems. The instant compositions are an improvement over both anaerobic adhesive compositions and other non-anaerobic adhesive compositions in that the instant compositions have the advantage of excellent CTV and cure speed with the benefit of relatively long pot life. Additionally they are air stabilized for indefinite periods of time if kept in thin layers or films.

Anaerobically curable compositions can be generally defined as a mixture comprising one or more acrylate or methacrylate monomers, along with one or more peroxy initiators, the decomposition of which initiators is accelerated by the presence of metal ions, the total composition being stable in the presence of air (oxygen) but curable in the absence of air (oxygen). Thus, anaerobically curable compositions are very effective when used between non-porous closely fitting substrated, but their cure is hindered when the applied adhesive composition is exposed to substantial amounts of oxygen, e.g. when the substrates to be bonded are porous or air-permeable, or when the bondline gap is greater than 0.5 mm. The strength of the adhesive would generally be expected to be lower when not properly confined from oxygen because of the stabilization effect of the oxygen on the adhesive composition. In traditional anaerobic systems, free-radical generation is generally concentrated where metal ions are located, which usually is at the surface of the substrate. The generation of the free-radicals is propagated to the middle of the adhesive layer from the surface. At large gaps, the rate of initiation at the surface is not enough to obtain good CTV. A combination of air stabilization and lack of free-radical propagation is believed to be one of the main factors that traditional anaerobic compositions are inherently subject to CTV limitation.

Non-anaerobically curable compositions, such as standard epoxy and polyester resin compositions usually exhibit good CTV but if designed to be fast curing suffer from a short pot life, e.g., usable time subsequent to mixing before polymerization leads to gelling. Additionally, these compositions, being two-part, require thorough mixing of stoichiometric proportions for complete cure. Solvent flushing facilities are necessary to clean application equipment prior to gelling which is inconvenient, expensive and often presents waste disposal problems and ecological hazards.

The instant composition requires an aromatic acyl peroxide and a non-aromatic acyl free-radical initiator, to be present in the same part of the composition. These initiators have accelerating counterparts which are kept in the other part of the adhesive composition. Thus, the accelerating system works to accelerate the generation of free-radicals by the initiator system once the two parts are admixed.

Thus, one particular object of the invention is to provide an improved two-part anaerobically curable adhesive composition which has a supplemental cure system comprised of an amine accelerator and an aromatic acyl peroxide to assist the total composition in curing through large bondline gaps, said composition not requiring metal ions to assist in the acceleration of free-radical initiation.

Another object of the invention is to provide a two-part adhesive composition which remains stable after the admixing of the two parts, has aerobic stabilization in thin layers, is fast curing and is an improvement in CTV over traditional anaerobically curable adhesive compositions.

Other objects of the instant invention will become apparent from the disclosure.

The instant adhesive compositions have the capability of curing through large gaps in a relatively short time. The two-tier cure system allows for a substantial pot-life as well, giving adequate time for adjustment of bonded assemblies and for cleaning of dispensing equipment. The supplementary (second tier) cure system, which comprises the aromatic acyl peroxide of part one and the amine accelerator of part two, is not dependent on metal catalysis for acceleration of cure. Thus, the composition as a whole is less surface dependent and bonds well to plastics and other inactive surfaces, such as aluminium, through large gaps.

One special feature of the instant compositions is found when they are spread into thin films and kept in open air, e.g., in substantial contact with oxygen. When this is done, the composition remains aerobically stable in the manner of anaerobically curable compositions of the prior art. Yet, in bulk or thick layers, e.g., beyond about 2.00mm, the adhesive composition is less stable in open air and has a limited pot life.

Since the instant compositions are particularly useful as sealants and gaskets as well as adhesives, the thin layer air stabilized feature is particularly important. Screen printing of gaskets often results in uncured or excess material being left on the screening apparatus for long periods of time, for example, overnight, it is important that the material remain uncured so as to allow for easy cleaning of the screen or for further use of the material on the screen. The instant compositions are particularly effective as materials which are compatible with such application since they would remain aerobically stable and in the uncured state indefinitely so long as the layer is thin enough. Generally layers of up to about 1.00mm have shown excellent aerobic stability.

While the reason for the thin-layered aerobic stability is not completely understood, nor is any one theory intended to be binding, it is believed that the benzoyl peroxide free-radical becomes oxygen stabilized due to its preference for the abundant oxygen molecules over those of the monomer.

According to the invention, both parts of the adhesive composition preferably contain similar proportions of a vinyl-type monomer, preferably an acrylic or methacrylic acid ester monomer, which cures via a free-radical reaction. The initiator system, which comprises at least two free-radical initiator compounds (see compounds (a) and (b) referred to above), must be kept in one part of the adhesive composition and an accelerator system which comprises at least one amine, preferably a tertiary aromatic amine, kept in the other part. Each part can remain stable indefinitely, e.g., one (1) year or more, until admixed with the other, whereupon cure of the adhesive composition is effected. Once the two parts are mixed there is a pot-life of up to about two (2) hours or more at room temperature, depending on the relative proportion of the non-anaerobic-type initiator and accelerator system present.

Examples of compound (a) of the initiator system are cumene hydroperoxide and t-butye-perbenzoate, whilst the optional acid may be maleic acid or acrylic acid. Examples of a sulfimide or a hydrazine derivative of the accelerator system are benzoic sulfimide and 1-acetyl-2 phenyl hydrazine respectively.

Although it is not absolutely necessary that equivalent amounts of polymerizable material be present in both parts, it is recommended that this be the case in order to facilitate the diffusion of the various components in each part (particularly the initiators and accelerators). The rheology of the two parts should be substantially similar to promote the effective intermingling of the initiator in one part with the accelerator in the other part, and to effectuate a uniform cure throughout the polymerizable material.

One advantage over the prior art gained by this invention is that the accelerators are more effectively dispersed throughout the adhesive composition as a whole, rather than merely applying an acceleration solution to the surface of the adhesive.

It is not necessary to pre-mix the two components prior to deposition on a surface. A coating of one

part of the adhesive composition may be placed on one surface and a coating of the other part may be placed on another surface, the two surfaces then being mated together so the respective coatings are in contact with each other.

While any vinyl-type monomers are usefully employable, the preferred polymerizable materials are the acrylates and methacrylates, which may be mono- or polyfunctionable.

Controlled cure speeds are possible independently of substrate surface. Priming of surfaces with accelerating solution, as in the prior art, is not necessary. Cure through relatively large bond-line gaps is now possible in relatively short times.

In practice, the adhesive composition can be applied by several methods. The two parts of the adhesive composition may be applied, one part to one surface, the other part to a second surface and the two coated surfaces placed in contact with each other; or alternatively, a layer of one part of the adhesive composition may be applied to a first surface, a layer of the other part applied over the first layer and a second uncoated surface placed in contact with the doubly coated first surface. Another alternative, especially suitable for slip-fitting parts or screw-threaded parts, is to place each part of the adhesive composition side by side on a first surface and to place a second surface in contact with the coated first surface, moving the two surfaces relative to each other to thereby mix the two parts of the adhesive composition. Another method is to mix the two parts of the adhesive together prior to any deposition onto surfaces. Once the coated parts are placed in contact with each other, the adhesive composition cures at room temperature to a strong bond in a relatively short time.

At least one polymerizable material must be present in each of the two-parts of this invention. While any allyl or vinyl-type reactive compound which undergoes free-radical polymerization is effectively useful, monomers of the acrylate and methacrylate ester type are preferred. The polymerizable acrylate and methacrylate ester monomers may be monofunctional, polyfunctional, or a combination of both. Generally, the monomers are exemplified but not limited to those selected from the class consisting of alkyl acrylates, cycloalkyl acrylates, alkyl methacrylates, cycloalkyl methacrylates, alkoxy acrylates, alkoxy methacrylates, alkylene diacrylates and alkylene dimethacrylates. Among the preferred monofunctional monomers are methyl methacrylate, lauryl methacrylate, 2-ethyl hexyl methacrylate, ethyl methacrylate, n-butyl methacrylate, iso-butyl methacrylate and t-butyl methacrylate. The most preferred are those monomers which have high boiling points and low volatility characteristics, including such monomers as tetrahydrofurfuryl methacrylate, cyclohexyl methacrylate, isobornyl methacrylate, hydroxyethyl methacrylate and hydroxy propyl methacrylate.

The monofunctional monomers mentioned above may generally be represented by the formula:

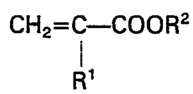

I.

wherein $R^1$ is H, $CH_3$ or lower alkyl, $R^2$ is H, alkyl, alkoxy, cycloalkyl, or alkylenyl group.

The effective range of the monofunctional polymerizable acrylate ester monomer to be used in the instant compositions may vary somewhat depending on the specific properties desired, but generally about 1 to about 90% by weight of the composition and preferably within the range of about 15 to about 80% by weight, and most preferably about 15 to about 40% by weight of the composition. Adjustments within these ranges are easily made within the skill of the art.

It may be desirable to add a polyfunctional monomer to the composition as well. When this is done, it generally should be in the range of about 1 to about 90% by weight of the composition, depending on the specific polyfunctional monomer, and preferably about 15% to about 40% by weight of the composition. The preferred polyfunctionals are dimethacrylates of various glycols. These monomers are disclosed in U.S. Patent No. 3,218,305, and are of the general formula:

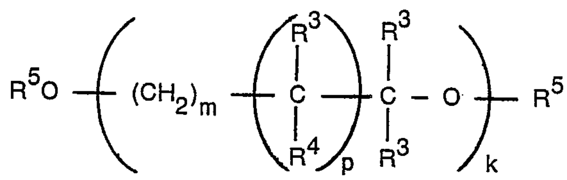

II.

wherein $R^3$ is H, $C_{1-4}$ alkyl or hydroxyalkyl or
$R^5OCH_2$—; $R^6$ is H, halogen or $C_{1-4}$ alkyl;
$R^4$ is H, OH or $R^5O$—; $R^5$ is $CH_2{=}CR^6C{=}O$;
m is an integer, preferably 1 to 8; k is an integer, preferably 1 to 20; and p is 0 or 1.

Examples of some preferred polyfunctional monomers of this formula are polyethylene glycol dimethacrylate, tetraethylene glycol dimethacrylate, triethylene glycol dimethacrylate and dipropylene glycol dimethacrylate.

Other suitable polymerizable acrylate ester monomers which may be employed are described in U.S. Patent No. 4,018,851, having the general formula:

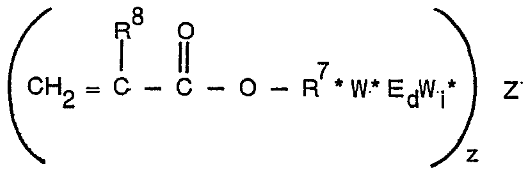

III.

wherein $R^8$ is selected from the class consisting of hydrogen, chlorine, and methyl and ethyl radicals; $R^7$ is a bivalent organic radical selected from the group consisting of lower alkylene of 1—8 carbon atoms, phenylene, and naphthylene; W is a polyisocyanate radical; E is an aromatic, heterocyclic or cycloaliphatic polyol or polyamine radical, preferably a diol, and more preferably a diol of a cycloaliphatic compound; d is either 1 or 0; i is 0 when d is 0, and otherwise equal to one less than the number of reactive hydrogen atoms of E; wherein Z is a (i) polymeric or copolymeric grafted alkylene ether polyol radical or (ii) polymeric or copolymeric methylene ether polyol radical; z is an integer equal to the valency of Z; wherein an asterisk indicates a urethane (—NH—CO—O—) or ureide (—NH—CO—NH—) linkage. Z may also be a polymeric or copolymeric methylene ether polyol radical, giving a group of polymerizable monomers disclosed in U.S. Patent No. 3,993,815.

Monomers generally characterized as polyuerthanes or polyureides, as disclosed in U.S. Patent No. 3,425,988, may also be used effectively. These monomers are formed from the reaction of an organic polyisocyanate and an acrylate ester having an active hydrogen in the non-acrylate portion of the ester. These monomers may be represented by the general formula:

$$(A—X—CO.NH)_{n}B \qquad \text{IV.}$$

wherein X is —O— or —$R^9$N—; $R^9$ is selected from a group consisting of H or lower alkyls of 1 through 7 carbon atoms; A is $CH_2$=$CR^{10}$.CO.O—; $R^{10}$ is H or $CH_3$; n is an integer from 2 to 6 inclusive; and B is a polyvalent substituted or unsubstituted alkyl, alkenyl, cycloalkyl, aryl, aralkyl, alkyloxy-alkylene, aryloxy-arylene or heterocyclic radical.

Finally, polymerizable urethane-acrylate monomers disclosed in U.S. Patent Application No. 356,679 to O'Sullivan, filed May 2, 1973, now abandoned, particularly Example 3 thereof, may be employed. Typical monomers of this type have the general formula of:

$$(CH_2=CR^{11}.CO.O.R^{13}.O.CO.NH)_{2}R^{12}$$

wherein $R^{11}$ is H, $CH_3$, $C_2H_5$ or Cl; $R^{12}$ is $C_{2-20}$ alkylene, alkenylene or cycloalkylene radical or a $C_{6-40}$ arylene, alkarylene, aralkarylene, alkyloxyalkylene or aryloxyarylene radical which may be substituted by 1—4 chlorine atoms or by 1—3 amino or by mono- or di-$C_{1-3}$ alkylamino or $C_{1-3}$ alkoxy groups. $R^{13}$ is one of the following less one hydrogen atom: (a) a $C_{1-8}$ hydroxy alkyl or aminoalkyl group, (b) a $C_{1-6}$ alkylamino-$C_{1-8}$ alkyl group; or (c) a hydroxyphenyl, an aminophenyl, a hydroxynaphthyl or an aminonaphthyl group which may be further substituted by an alkyl, alkylamino or dialkylamino group, each alkyl group in this subpart (c) containing up to about 3 carbon atoms. Of these, the preferred compositions contain either monomer VI., of formula:

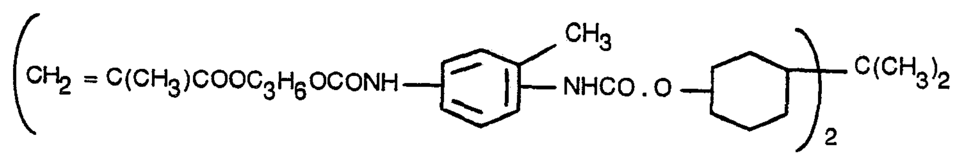

VI.

or monomer VII, of formula:

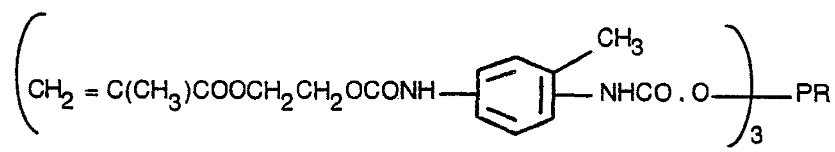

or both, (PR represents a propylene triol oligomer residue).

Polyester-urethane-acrylate compounds, as disclosed in U.S. Patent Application Serial No. 279,905 to Nativi, filed July 2, 1981, are also preferred. These compounds are formed by reacting a polyester diol with toluene diisocyanate, and further reacting that product with a polymerizable acrylic or methacrylic acid ester. The preferred polyester diol is manufactured by the Inolex Company under the trade name Lexorez 1400—120. This polyester diol is formed by the reaction of neopentyl glycol with 1,6-hexanediol adipate. Other polyester diols useful are formed by the reaction of neopentyl glycol with a diol adipate of more than 3 carbons, e.g., 1,4-butanediol adipate.

Mixtures of some or all of the above polymerizable acrylate ester monomers are also useful.

The accelerators of free-radical polymerization of the instant compositions are generally used with good results in concentrations of less than 10% by weight, the preferred range being about 0.1% to about 0.75%. Sulfimides are the preferred group of free-radical accelerators, with the preferred species being 3-oxo-2, 3-dihydrobenz[d]-isothiazole-1,1-dioxide, commonly known as benzoic sulfimide or saccharin. Amines are required to be employed as accelerators for free-radical production with the preferred amines being tertiary amines. The preferred tertiary amines are aromatic. Examples of those are N,N-dimethyl-paratoluidine, N,N-dihydroxyethyl-p-toluidine, dimethyl aniline, diethyl aniline, N,N-diethyl-p-toluidine. While tertiary aromatic amines, such as those mentioned, are preferred, tertiary alkyl amines are also useful, the preferred being tributylamine.

Acids having a pKa not exceeding 6, as disclosed in U.S. Patent No. 4,180,640 to Melody, are also useful as accelerators. Maleic acid and acrylic acid are preferred. Hydrazine derivatives of the type disclosed in U.S. Patent No. 4,321,349 to R. Rich, are found to be very effective in the instant compositions. The preferred hydrazine is 1-acetyl-2-phenyl hydrazine. The hydrazines useful generally have the formula

$$R^{17}—NH—NH—CO—R^{18} \qquad VIII.$$

wherein $R^{17}$ and $R^{18}$ may be the same or different and are $C_{1-6}$ straight or branched chain alkyl radicals, $C_{1-4}$ acyl radicals and $C_{1-14}$ aryl radicals. The hydrazines, if present, are in amounts sufficient to accelerate the polymerization at room temperature.

Initiators may be of the organic peroxy or hydroperoxy type; perester or peracid type; or persalt. Especially useful are the perester and peroxide type, among which t-butyl perbenzoate, t-butyl peroctoate and cumen hydroperoxide are preferred. The aromatic acyl peroxides useful are benzoyl peroxide, and its substituted compounds selected from the group consisting of alkyl and chloro benzoyl peroxide derivatives. Orthomethyl benzoyl peroxide, parachloro benzoyl peroxide and 2,4-dichloro benzoyl peroxide are preferred. The initiators are usually employed in amounts of about 0.1% to about 10% by weight of the composition.

The invention may be made into a photo-curable composition by adding photoinitiators in addition to the aromatic acyl peroxides. Among those photoinitiators useful are: (a) organic compounds which are activated to produce free radicals by exposure to UV radiation, or (b) coreactants which react in situa to generate free radicals. Thus, free radicals are formed to initiate polymerization of the polymerizable acrylate monomers and harden the composition in adhesive contact with the substrate surfaces.

Initiators of type (a) above, are preferred, and comprise carbonyl containing compounds selected from: (i) $C_{1-6}$ straight or branched chain alkyl diones; (ii) metal carbonyls of the formula $M_x(CO)_y$ wherein M is a metal atom, x is 1 or 2, and y is an integer determined by the total valence of the metal atoms, generally from 4 to 10; and (iii) carbonyl compounds of the general formula:

$$R^{19}(CO)R^{20} \qquad IX.$$

in which $R^{19}$ is a $C_{1-10}$ alkyl, aryl, aralkyl or alkaryl radical, and $R^{20}$ is $R^{19}$ or H. $R^{19}$ or $R^{20}$ can contain any substituents which do not adversely affect the compound in serving its intended function. For example, $R^{19}$ and $R^{20}$ can be alpha-substituted with an alkyl, aryl, alkaryl, alkoxy or aryloxy radical, or with an amino or a mono- or dialkylamino derivative thereof, all the above substituents containing up to about six carbon atoms. In addition $R^{19}$ and $R^{20}$, taken together with the carbonyl group to which they are attached, may represent an aromatic or heterocyclic ketone containing up to about 16 carbon atoms.

The photo-polymerization initiator is preferably selected from the class consisting of acetophenones, benzophenones, and 1- and 1-acetonaphthones or a substituted compound of these. Among the most preferred photo-initiators are 2,3-butadiene, 2,4-dimethyl-3-pentanone, 1- and 2-naphthaldehyde, p-phenyl-acetophenone, n-propionophenone, fluoren-9-one, xanthen-9-one, 4,4-bis-methylaminobenzophenone, 2,2-dimethoxy-2-phenylaceto-phenone, 2,2-diethoxyacetophenone, 2-chlorothioxanthone, ethyl-p-dimethylaminobenzoate, or a combination of these.

Among the preferred metal carboxy initiators are $Mn_2(CO)_{10}$, $Fe(CO)_5$, $Re_2(CO)_{10}$, $Cr(CO)_6$, $Co_2(CO)_8$, $Ni(CO)_4$ or $Mo(CO)_6$.

Useful free-radical initiators also include those that can be decomposed by the action of heat to produce free radicals. They also include other redox polymerization catalysts or any compound capable of generating free radicals. Such compounds can easily be selected from those skilled in the art. For a more detailed discussion, see U.S. Patent Nos. 3,043,820; 3,691,438; 3,616,640, and 3,832,274.

Inhibitors and chelators, well recognized in the art for imparting stability to polymerizable compositions, are optional but recommended. Those inhibitors useful in the present composition are usually selected from the group consisting of hydroquinones, benzoquinones, naphthoquinones, phenanthraquinones, anthraquinones, and substituted compounds of any of these. Additionally, various phenols can be employed as inhibitors, the preferred one being 2,6-di-tert-butyl-4-methyl phenol. Among the chelators which may be optionally present in the adhesive composition are the beta-diketones and the quarternary salt of ethylenediaminetetra acetic acid (EDTA). Both the inhibitors and chelators may be effectively employed in levels of about 0.1 to about 1% by weight, without adversely affecting the speed of cure of the polymerizable adhesive composition. Cross-linking agents, optionally present in amounts from

about zero to about 10% by weight of the composition, include such compounds as copolymerizable dimethacrylates.

The amount of thickness, viscosity or thixotropy desired can be varied in accordance with the particular application required. Thickeners, plasticizers, diluents and various other agents common to the art can be employed in any reasonable manner to produce the desired characteristics.

The invention will be appreciated further from the examples to follow, which are not meant in any way to restrict the effective scope of the invention.

TABLE ONE

Example 1

Part One

| | Formulations % by weight | | | |
|---|---|---|---|---|
| | I | II (Control | III | IV (Control) |
| hydroxyethyl methacrylate | 34.63 | — | 17.40 | |
| urethane-acrylate[1] block resin A | 35.7 | — | — | |
| urethane-acrylate[2] block resin B | — | — | 48.52 | |
| urethane-acrylate[3] block resin C | — | — | 24.31 | |
| maleic acid | 3.77 | 1.89 | 3.77 | 1.89 |
| benzoyl peroxide | 1.00 | — | 1.00 | |
| t-butyl-perben[illegible] | 4.85 | 2.43 | 4.85 | 2.43 |
| free-radical[4] [illegible]rs | — | — | 0.15 | |
| **Part Two** | | | | |
| hydroxyethyl methacrylate | 36.73 | 35.95 | 18.15 | 18.07 |
| urethane-acrylate[1] block resin A | 59.11 | 57.85 | — | — |
| urethane-acrylate[2] block resin B | — | — | 50.59 | 50.35 |
| urethane-acrylate[3] block resin C | — | — | 25.35 | 25.23 |
| benzoic sulfimide | 1.88 | 0.94 | 1.88 | 0.94 |
| 1-acetyl-2-phenyl-hydrazine | 1.88 | 0.94 | 1.88 | 0.94 |
| N,N-dihydroxyethyl-p-toluidine | 0.4 | — | 2.0 | — |
| free radical[4] stabilizers | — | — | 0.15 | 0.15 |

The footnotes for all tables and examples are given below:

(1) This reactive resin A is a block prepolymer produced by capping polytetramethylene oxide (PTME) of molecular weight about 2,000, with toluene di-isocyanate (TDI), and subsequently capping the product with hydrogenated bisphenol A (HBPA), toluene di-isocyanate and hydroxypropyl methacrylate (HPMA) in turn. Its structure may be written as:

$$(HPMA—TDI—HBPA—TDI)_2—(PTME).$$

(2) This reactive resin B is produced by capping hydrogenated bisphenol A with toluene di-isocyanate, and reacting the product with hydroxypropyl methacrylate.

(3) This reactive resin C is produced by capping an hydroxy-terminated polyoxypropylene derivative of trimethylolpropane of formula

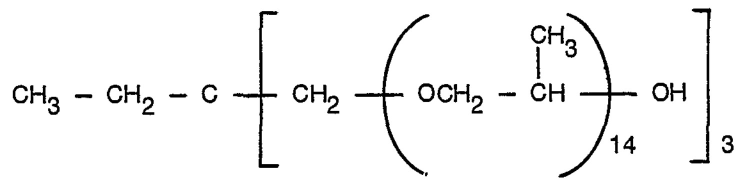

with toluene di-isocyanate and reacting the product with hydroxypropyl methacrylate.

(4) Mixture of naphthoquinone, the sodium salt of ethylendiaminetetra acetic acid and 2,6-di-t-butyl-4-methyl phenol.

(5) Polyester urethane methacrylate is formed by reacting neopentyl glycol with 1,6-hexanediol adipate.

(6) Silica, mica, polyethylene powder, Teflon (RTM).

As seen in Table One, each formulation has a Part One and Part Two which comprise the adhesive composition as a whole. Formulations I and III are exemplary of compositions of the instant invention. Formulations II and IV have only the free-radical initiator t-butyl-perbenzoate and maleic acid in Part One, and no amine component in Part Two.

Equal quantities of the two parts of each formulation were mixed respectively together and the mixture applied to the grit-blasted, degreased surface of mild steel lap shears such that the coated area on each lap shear was $2.27cm^2$. The coated areas of the respective lap shears were placed in contact with each other and clamped, a bondline being considered for practical purposes to be zero or a nominal 0.05mm.

Additionally, lap shear test specimens were similarly prepared for each of the formulations, this time varying the bondline gap by using wire spacers between the lap shears.

A variety of tests were run on the above formulations, each test value being the average of ten test specimens.

Table Two demonstrates the effect bondline gap has on the tensile shear strength of typical one-part anaerobically curable adhesive compositions of the prior art. As indicated by the control specimens, II and IV, one-part anaerobically curable compositions show a marked decrease in strength as the bondline gap increases. The instant two-part anaerobically curable compositions, exemplified by formulations I and III, show significant tensile shear strength at all bondline gaps shown.

TABLE TWO

Tensile Shear Strength[(1)]

| Bondline Gap | I | II (Control) | III | IV (Control) |
|---|---|---|---|---|
| | ($daNcm^{-2}$) | ($daNcm^{-2}$) | ($daNcm^{-2}$) | ($daNcm^{-2}$) |
| 0.05mm | 218 | 255 | 280 | 249 |
| 0.5mm | 195 | 94 | 267 | 55 |
| 1.0mm | 167 | 0 | 104 | 9 |

(1) Test specimens were allowed to cure at room temperature for 24 hours to allow time for full cure through volume where possible. The specimens were tested to destruction in tensile shear mode according to ASTM D1002—64.

Table Three indicates the fixture time for a nominal bondline gap. The prior art anaerobically curable control formulations demonstrate faster fixture times than the compositions of the instant invention (formulations I and III). The fixture times of the instant invention are, however, relatively fast due to their anaerobic characteristics. Pot life is also indicated in this table. The control formulations exhibit an indefinite pot life as long as there is sufficient oxygen present to stabilize. The instant compositions have a reasonably long pot life, but it is limited due to the incorporation of the supplementary cure system, e.g., the amine accelerator and the aromatic acyl peroxide.

TABLE THREE

| Formulation | Bondline Gap | Fixture time (Room Temp.) | Pot Life (Room Temp.) |
|---|---|---|---|
| I | 0.05mm | 60 secs. | 1 hour |
| II (control) | 0.05mm | 50 secs. | indefinite |
| III | 0.05mm | 135 secs. | 1.25 hours |
| IV (control) | 0.05mm | 85 secs. | indefinite |

Table four shows the results of compression tests performed on pin and collar joints. Test samples were made on steel pins and collars and allowed to cure at room temperature for 72 hours. The samples were tested to destruction at room temperature using a tensile machine in the compression mode. The results indicate that at nominal bondline gaps (slip-fit), the strength of the instant compositions (I, III) are higher than those of the prior art.

TABLE FOUR

Compression Tests — Pin and Collar Joint

72 hour room temperature cure — tested room temp.

| Formulation | $daNcm^{-2}$ |
|---|---|
| I | 295 |
| II (control) | 254 |
| III | 295 |
| IV (control) | 254 |

Example 2

Three compositions were formulated with the amounts in percent by weight based on the individual parts, as shown below in Table Five. Formulation V is representative of a one-part anaerobic composition of the prior art. For convenience in tabulating, this formulation is listed as having cumene hydroperoxide in a separate part. In actuality, it is contained along with the other ingredients of Part Two.

Formulation VI represents a composition nearly identical to the compositions of the instant invention except it contains only the supplementary surface-independent cure system and lacks an anaerobic cure system. The surface-independent cure system comprises the benzoyl peroxide of Part One and the N,N-dihydroxyethyl-p-toluidine of Part Two. This formulation was formulated closely for formulation V, which represents an embodiment of the instant invention, so as to enable meaningful comparison tests to be carried out. Formulation V as stated is a composition of the instant invention, containing the anaerobic cure system, e.g., the cumene hydroperoxide being necessary to initiate the methacrylate resins, and the supplementary surface-independent system. Formulation VII is an embodiment of the instant invention.

Lap shear specimens were prepared in the manner of Example 1 and using each of the formulations in Table Five. The results are shown in Table Six.

TABLE FIVE

| Part One | Formulations % by weight V (Control) | VI | VII |
|---|---|---|---|
| hydroxyethyl acrylate | — | 37.94 | 37.32 |
| urethane block resin A(1) | — | 61.06 | 60.08 |
| cumene hydroperoxide | 0.80 | — | 1.60 |
| benzoyl peroxide | — | 1.00 | 1.00 |
| **Part Two** | | | |
| hydroxyethyl methacrylate | 36.97 | 37.56 | 35.44 |
| urethane block resin A(1) | 60.28 | 60.44 | 57.06 |
| benzoic sulfimide | 1.75 | — | 3.50 |
| tributylamine | 1.00 | — | 2.00 |
| N,N-dihydroxyethyl-p-toluidine | — | 2.00 | 2.00 |

TABLE SIX

| | Formulations V | VI | VII (invention) |
|---|---|---|---|
| Bondline gap | Tensile Shear Strength daNcm$^{-2}$ | | |
| 0.05mm | 166 | 60 | 242 |
| 0.50mm | 0 | 96 | 219 |
| 1.25mm | 0 | 85 | 146 |
| Fixture Time (minutes) (Bondline Gap 0.05mm) | 3.5 — | 30 | 7 |
| Pot Life (minutes) | indefinite (1 year) | 13 | 12 |

As the above Table Six indicates, composition VII of the instant invention demonstrates higher tensile shear strengths as the bondline gap increases than the anaerobically curable compositions (V) of the prior art and those compositions with only the supplementary cure system (VI). The prior art anaerobically curable composition (V) has a shorter fixture time than the other two formulations, but has no tensile shear strength at gaps greater than 0.05 mm, indicating virtually no CTV. Formulation VI has a reasonably good pot life, a CTV better than the prior art composition, but suffers from an undesirably long fixture time. The instant invention (VII), has a CTV superior to the others, a fixture time which is acceptable and a reasonably good pot life.

This example clearly indicates the pronounced effect upon CTV, and hence upon tensile shear strength, that the two-tier cure system has upon the instant invention.

Example 3

Table Seven shows Formulations VIII, X and XII of the instant invention. Formulations IX, XI, and XIII are one-part anaerobically curable compositions of the prior art, particularly useful as chemical gaskets,

which are nearly identical to the formulation which precedes each, except for the lack of the two-tier cure system. These control compositions are shown in the table as two-part merely for convenience in tabulating. Typically all ingredients of the controls are mixed together in a one-part standard anaerobically curable system. The control compositions do not contain the benzoyl peroxide and amine free-radical system.

Tables Eight and Nine tabulate the results of tensile shear strengths and pot life, and gasket compression tests conducted on each of the formulations of Table Seven. The tests were conducted on grit-blasted mild steel (GBMS), as well as less active surfaces such as aluminum, low aluminum-content copper and plastic. Bondline gap was also varied, using 0.05 mm as representative of nominal bondline gap, and 1.00 mm as a large gap for anaerobically curable adhesive compositions.

It is clear from the Tables Eight and Nine that the instant compositions (Formulations VIII, X, XII) are less surface dependent in that they are able to cure on inactive surfaces such as low copper aluminum and plastic at gaps of 1.00 mm. The control formulations failed to cure after 24 hours at room temperature when the surface was an inactive one such as low copper aluminum, or plastic. Appreciable strength was obtained from the controls on aluminum when the bondline gap was negligible, 0.05 mm, such that anaerobic conditions were obtained. When the gap was increased to 1.00 mm, either no cure or negligible strength was obtained from the controls. The instant invention exhibits good tensile shear strengths on the inactive aluminum surfaces at both bondline gaps. This demonstrates both the surface independency feature of the invention as well as the ability to cure through relatively large gaps.

Table Nine shows results obtained from gasket compression tests. The formulations were used to make chemical gaskets by coating flanges which were assembled into hydraulic closed-system test apparati. The gaskets were allowed 24 hour in-place room temperature cures. Spacers were used to obtain the 0.50 mm bondline gap. The gaskets were tested by applying internal hydraulic pressure to the flange assembly and recording the pressure required to cause the gasket to fail, thereby leaking the liquid through the flange bondline.

The results indicate that compositions of the instant invention are far superior as sealants and gaskets at gaps of above 0.5 mm, and particularly at 0.50 mm, and on relatively inactive surfaces (aluminum) as well as active. In some cases, the instant compositions out-perform the prior art compositions (controls) on active surfaces at the nominal bondline gap. On inactive surfaces and large bondline gaps zero compression was required to cause the prior art compositions to fail.

It is demonstrably clear that compositions of the instant invention are far superior in gap-curing ability and surface independency than standard anaerobically curable compositions. The pot life (useable time subsequent to mixing) of the instant compositions are not as good as the indefinite pot life of the anaerobics, but the pot life is reasonably good considering the other properties, such as gap curing and surface independency properties.

TABLE SEVEN

| Ingredients | Formulations % by weight | | | | | |
|---|---|---|---|---|---|---|
| Part One | VIII | IX (Control) | X | XI (Control) | XII | XIII (Control) |
| polyethylene glycol dimethacrylate | 40.80 | 41.70 | 24.66 | 24.90 | — | — |
| propoxylated bisphenol-A fumarate | — | — | 23.59 | 23.78 | — | — |
| polyester-urethane[5] methacrylate | — | — | — | — | 74.88 | 75.70 |
| ethoxylated bisphenol-A dimethacrylate | — | — | — | — | 8.13 | 8.14 |
| plasticizer (aliphatic long chain alcohols) | 11.94 | 22.20 | 22.50 | 22.70 | 0.90 | 0.90 |
| viscosity modifiers[6] | 41.01 | 31.00 | 23.03 | 23.20 | 6.19 | 6.20 |
| maleic acid | 1.20 | 0.60 | — | — | — | — |
| acrylic acid | — | — | — | — | 5.0 | 5.19 |
| benzoyl peroxide | 0.75 | — | 0.75 | — | 0.50 | — |
| cumene hydroperoxide | 3.40 | 1.70 | 3.00 | 1.12 | 3.00 | 1.50 |
| stabilizer[4] | 0.10 | 1.40 | 0.07 | 0.97 | 0.10 | 1.32 |
| pigment | 0.80 | 0.80 | 2.40 | 2.40 | 1.0 | — |
| Part Two | | | | | | |
| polyethylene glycol dimethacrylate | 42.32 | — | 25.36 | — | 80.31 | — |
| propoxylated bisphenol-A fumarate | — | — | 24.26 | — | — | — |
| ethoxylated bisphenol-A fumarate | — | — | — | — | 8.65 | — |
| plasticizers (aliphatic long chain alcohols) | 12.39 | — | 23.14 | — | 0.96 | — |
| viscosity modifiers[6] | 42.54 | — | 23.68 | — | 6.58 | — |
| 1-acetyl-2-phenyl hydrazine | 1.20 | 0.6 | — | — | 0.9 | 0.45 |
| N,N-dihydroxyethyl-p-toluidine | 0.50 | — | 0.5 | — | 0.5 | — |
| benzoic sulfimide | — | — | 1.86 | 0.93 | 1.2 | 0.60 |
| stabilizer[4] | 0.25 | — | 1.20 | — | 1.2 | — |
| pigment | 0.80 | — | — | — | — | — |

TABLE EIGHT

| Formulation | Room Temp. Pot Life | Bondline Gap | 24 Hour Room Temp. Cure — Room Temp. Test Tensile Strength — daNcm$^{-2}$ GBMS | AL | Low Copper AL | Plastic |
|---|---|---|---|---|---|---|
| VIII | 1.5 hrs. | 0.05 mm | 73 | 36 | 5 | — |
| | | 1.00 mm | 25 | 16 | 2 | yes |
| IX (control) | indefinite | 0.05 mm | 71 | 37 | no cure | — |
| | | 1.00 mm | 6 | 0 | no cure | no |
| X | 2.0 hrs. | 0.05 mm | 24 | 13 | — | — |
| | | 1.00 mm | 7 | 6 | — | — |
| XI (control) | indefinite | 0.05 mm | 9 | no cure | — | — |
| | | 1.00 mm | 0 | no cure | — | — |
| XII | 1.0 hr. | 0.05 mm | 74 | 51 | — | — |
| | | 1.00 mm | 56 | 28 | — | — |
| XIII (control) | indefinite | 0.05 mm | 13 | 15 | — | — |
| | | 1.00 mm | 0 | 1 | — | — |

TABLE NINE

| Formulation | Bondline Gap | Gasket Compression Tests (Hydraulic Bursting Pressures at Room Temp. — 24 Hr. Room Temp. Cure) (PSI) Mild Steel | AL |
|---|---|---|---|
| VIII | 0.05 mm | 1600 | 1300 |
| | 0.50 mm | 1200 | 1300 |
| IX (control) | 0.05 mm | 1800 | 900 |
| | 0.50 mm | <20 | 0 |
| X | 0.05 mm | 1800 | 1300 |
| | 0.50 mm | 2200 | 1500 |
| XI (control) | 0.05 mm | 800 | 900 |
| | 0.50 mm | <10 | 0 |
| XII | 0.05 mm | 3000 | 1500 |
| | 0.50 mm | 3000 | 1100 |
| XIII (control) | 0.05 mm | 1900 | 1200 |
| | 0.50 mm | 30 | 0 |

Example Four

The instant compositions possess cure and stability features which are both anaerobic and non-anaerobic in nature. These compositions have a limited pot life in bulk form, due to the supplementary cure system. In thin films, however, such as those left on silk screens after use, the compositions exhibit anaerobic stabilization properties and remain liquid or unpolymerized indefinitely so long as substantial oxygen is present.

As a means of demonstrating this, glass plates were coated with the formulations of the instant invention as the thicknesses shown below:

| Formulation | Thickness of Film |
|---|---|
| VIII | 1 mm |
| X | 1 mm |
| XII | 0.5 mm |

In all cases, the coatings remained in the uncured state, exhibiting aerobic stabilization typical of the prior art anaerobically curable compositions.

**Claims**

1. A two-part adhesive composition characterized by,
(A) As a first-part a resin system comprising,
(i) at least one polymerizable acrylate or methacrylate material;
(ii) an initiator system of free-radical polymerization comprising:
(a) a compound selected from peroxides, hydroperoxides, peresters, persalts and peracids, exclusive of aromatic acyl peroxides, and
(b) at least one aromatic acyl peroxide;
(iii) optionally an acid with a pKa not exceeding 6;
(B) As a second part a resin system comprising,
(i) at least one polymerizable acrylate or methacrylate material;
(ii) an accelerator system comprising an amine, preferably a tertiary amine; and optionally either a sulfimide, or an hydrazine derivative, or both;
wherein the resin systems of both parts are substantially matched in viscosity and rheology.

2. The adhesive composition of claim 1, characterized by one or more of the following features:
(a) compound (a) of the initiator system in the first part is cumene hydroperoxide;
(b) compound (a) of the initiator system in the first part is t-butyl-perbenzoate;
(c) the sulfimide of the accelerator system of the second part and the hydrazine derivative of the second part are benzoic sulfimide and 1-acetyl-2-phenyl hydrazine respectively; and
(d) the acid of the first part is maleic acid or acrylic acid.

3. The adhesive composition of claim 1, characterized by one or more of the following features:
(a) the amine of the accelerator system of the second part is N,N-dihydroxy-ethyl-p-toluidine;
(b) the amine of the accelerator system of the second part is N,N-dimethyl-p-toluidine; and
(c) the amine of the accelerator system of the second part is dimethyl aniline.

4. The adhesive composition of claim 1, characterized in that the polymerizable acrylate or methacrylate material of either or both parts is a monofunctional monomer and corresponds to the formula

$$CH_2{=}\underset{\displaystyle R^1}{\underset{|}{C}}{-}COOR^2$$

wherein $R^1$ is H, $CH_3$ or lower alkyl, $R^2$ is H, alkyl, alkoxy, cycloalkyl or alkylenyl group.

5. The polymerizable material of claim 4, characterized by one or more of the following features:
(a) the monofunctional monomer is hydroxypropyl methacrylate;
(b) the monofunctional monomer is hydroxyethyl methacrylate; and
(c) the monofunctional monomer is tetrahydrofurfuryl methacrylate.

6. The adhesive composition of claim 1, characterized in that the polymerizable material of either or both parts is a polyfunctional monomer and corresponds to the formula

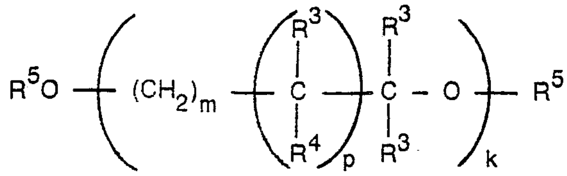

II.

wherein $R_3$ is H, $C_{1-4}$ alkyl or hydroxyalkyl or $R^5OCH_2$—; $R^6$ is H, Halogen or $C_{1-4}$ alkyl; $R^4$ is H, OH or $R^5O$—; $R^5$ is $CH_2{=}CR^6C{=}O$; m is an integer from 1 to 8; k is an integer from 1 to 20; and p is 0 or 1.

7. The polymerizable material of claim 6, characterized by one or more of the following features:
(a) the polyfunctional monomer is polyethylene glycol dimethacrylate;
(b) the polyfunctional monomer is tetraethylene glycol dimethacrylate;
(c) the polyfunctional monomer is triethylene glycol dimethacrylate; and
(d) the polyfunctional monomer is dipropylene glycol dimethacrylate.

8. The adhesive composition of claim 1, characterized in that the polymerizable material of either or both parts is a polymerizable acrylate ester monomer represented by the formula

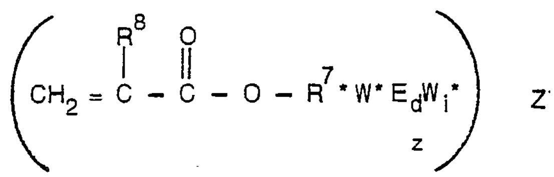

III.

wherein $R^8$ is selected from hydrogen, chlorine, and methyl and ethyl radicals; $R^7$ is a bivalent organic radical selected from lower alkylene of 1—8 carbon atoms, phenylene, and naphthylene; W is a polyisocyanate radical; E is an aromatic, heterocyclic or cycloaliphatic polyol or polyamine radical, a diol of a cycloaliphatic compound; d is either 1 or 0; i is 0 when d is 0, and otherwise equal to one less than the number of reactive hydrogen atoms of E; wherein Z is a (i) polymeric or copolymeric grafted alkylene ether polyol radical or (ii) polymeric or copolymeric methylene ether polyol radical; z is an integer equal to the valency of Z; wherein an asterisk indicates a urethane (—NH—CO—O—) or ureide (—NH—CO—NH—) linkage; Z may also be a polymeric or copolymeric methylene ether polyol radical; or

$$(A{-}X{-}CO.NH)_{n}B \qquad \text{IV}$$

wherein X is —O— or —$R^9N$=; $R^9$ is selected from H or lower alkyls of 1 through 7 carbon atoms; A is $CH_2{=}CR^{10}.CO.O$—; $R^{10}$ is H, or $CH_3$; n is an integer from 2 to 6 inclusive; and B is a polyvalent substituted or unsubstituted alkyl, alkenyl, cycloalkyl, aryl, aralkyl, alkyloxy-alkylene, aryloxy-arylene or heterocyclic radical.

9. The adhesive composition of claim 1, characterized in that the polymerizable material of either or both parts is a polymerizable acrylate ester monomer represented by the formula:

$$(CH_2{=}CR^{11}.CO.O.R^{13}.O.CO.NH)_{2}R^{12} \qquad \text{V}$$

wherein $R^{11}$ is H, $CH_3$, $C_2H_5$ or Cl; $R^{12}$ is a $C_{2-20}$ alkylene, alkenylene or cycloalkylene radical or a $C_{6-40}$ arylene, alkarylene, aralkarylene, alkyloxyalkylene or aryloxyarylene radical which may be substituted by 1—4 chlorine atoms or by 1—3 amino or mono- or di-$C_{1-3}$ alkylamino or $C_{1-3}$ alkoxy groups; $R^{13}$ is one of the following less one hydrogen atoms: (a) a $C_{1-8}$ hydroxy alkyl or aminoalkyl group, (b) a $C_{1-6}$ alkylamino-$C_{1-8}$ alkyl group, or (c) a hydroxyphenyl, an aminophenyl, a hydroxynaphthyl or an aminonaphthyl group which may be further substituted by an alkyl, alkylamino or dialkylamino group, each alkyl group in this subpart (c) containing up to about 3 carbon atoms.

10. The adhesive composition of claim 1, characterized in that the polymerizable material of either or both parts is a polymerizable acrylate ester monomer which has the formula:

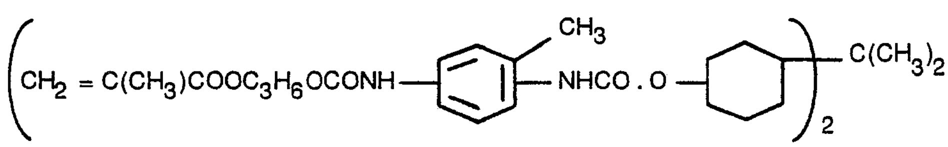

VI.

or monomer VII, of formula:

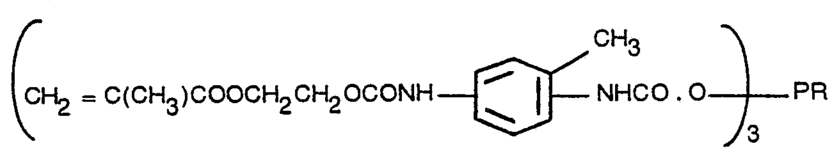

where PR represents a propylene triol oligomer residue.

11. A method of bonding parts together, said method characterized by

(1) coating a first part of a two-part adhesive onto a first surface;

(2) coating a second part of a two-part adhesive onto a second surface;

(3) placing the two surfaces in contact with each other at the area coated by each respective part of the adhesive composition, said adhesive composition comprising

(A) as a first part a resin system comprising

(i) at least one polymerizable acrylate or methacrylate material;

(ii) an initiator system of free-radical polymerization comprising,

(a) a compound selected from the group consisting of peroxides, hydroperoxides, peresters, persalts and peracids, exclusive of aromatic acyl peroxides; and

(b) at least one aromatic acyl peroxide;

(iii) optionally an acid with a pKa not exceeding 6; and

(B) as a second part a resin system comprising,

(i) at least one polymerizable acrylate or methacrylate material;

(ii) an accelerator system comprising at least one amine; and optionally either a sulfimide, or an hydrazine derivative, or both, wherein the resin system of both parts are substantially matched in viscosity and rheology.

## Patentansprüche

1. Zweiteilige Klebstoffverbindung, gekennzeichnet durch

(A) ein Kunstharzsystem als ersten Teil, umfassend

(i) wenigstens ein polymerisierbares Acrylat oder Methacrylat;

(ii) ein Startersystem einer Frei-Radikal-Polymerisation, enthaltend

(a) eine Verbindung, die ein Peroxid ist, oder ein Hydroperoxid, ein Perester, ein Persalz oder eine Persäure, ausgenommen aromatische Acylperoxide, und

(b) wenigstens ein aromatisches Acylperoxid;

(iii) wahlweise eine Säure mit einem pKa-Wert, der nicht größer als 6 ist;

(B) als zweiten Teil ein Kunstharzsystem, enthaltend

(i) wenigstens ein polymerisierbares Acrylat oder Methacrylat;

(ii) ein Beschleunigersystem, umfassend ein Amin, vorzugsweise ein tertiäres Amin; und wahlweise entweder ein Sulfimid oder ein Hydrazinderivat, oder beides;

wobei die Kunstharzsysteme beider Teile bezüglich Viskosität und Rheologie einander im wesentlichen entsprechen.

2. Klebstoffverbindung nach Anspruch 1, gekennzeichnet durch eines oder mehrere der folgenden Merkmale:

(a) die Verbindung (a) des Startersystems im ersten Teil ist ein Cumolhydroperoxid;

(b) die Verbindung (a) des Startersystems im ersten Teil ist ein t-Butyl-Perbenzoat;

(c) das Sulfimid des Beschleunigersystems des zweiten Teils und das Hydrazinderivat des zweiten Teiles sind benzolische Sulfimide bzw. 1-Acetyl-2-Phenylhydrazin; und

(d) die Säure des ersten Teiles ist eine Maleinsäure oder eine Acrylsäure.

3. Klebstoffverbindung nach Anspruch 1, gekennzeichnet durch eines oder mehrere der folgenden Merkmale:

(a) das Amin des Beschleunigungssystems des zweiten Teiles ist N,N-Dihydroxy-Äthyl-p-Toluidin;

(b) das Amin des Beschleunigersystems des zweiten Teiles ist N,N-Dimethyl-p-Toluidin; und

(c) das Amin des Beschleunigersystems des zweiten Teiles ist Dimethylanilin.

4. Klebstoffverbindung nach Anspruch 1, dadurch gekennzeichnet, daß das polymerisierbare Acrylat oder Methacrylat des einen oder beider Teile ein monofunktionales Monomer ist und nach der Formel aufgebaut ist

$$CH=\underset{\displaystyle R^1}{\underset{|}{C}}—COOR^2 \qquad I$$

wobei $R^1$ H, $CH_3$ oder ein niedriges Alkyl ist, $R^2$ H, Alkyl, Alkoxy, Cycloalkyl oder eine Alkylenylgruppe.

5. Polymerisierbares Material nach Anspruch 4, gekennzeichnet durch eines oder mehrere der folgenden Merkmale:

(a) das monofunktionale Monomer ist Hydroxypropylmethacrylat;

(b) das monofunktionale Monomer ist Hydroxyäthylmethacrylat; und

(c) das monofunktionale Monomer ist Tetrahydrofurfurylmethacrylat.

6. Klebstoffverbindung nach Anspruch 1, dadurch gekennzeichnet, daß das polymerisierbare Material des einen oder beider Teile ein polyfunktionales Monomer von der folgenden Formel ist:

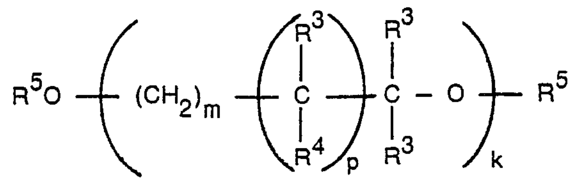 II.

wobei $R_3$ H, $C_{1-4}$ Alkyl oder Hydroxyalkyl oder $R^5OCH_2$— ist; $R^6$ ist H, ein Halogen, oder $C_{1-4}$ Alkyl; $R^4$ ist H, OH, oder $R^5O$—; $R^5$ ist $CH_2{=}CR^6C{=}O$; m ist ein ganzes Vielfaches von 1 bis 8; k ist ein ganzes Vielfaches von 1 bis 20; und p ist 0 oder 1.

7. Polymerisierbares Material nach Anspruch 6, gekennzeichnet durch eines oder mehrere der folgenden Merkmale:

(a) das polyfunktionale Monomer ist Polyäthylenglykoldimethacrylat;
(b) das polyfunktionale Monomer ist Tetraäthylenglykoldimethacrylat;
(c) das polyfunktionale Monomer ist Triäthylenglykoldimethacrylat; und
(d) das polyfunktionale Monomer ist Dipropylenglykoldimethacrylat.

8. Klebstoffverbindung nach Anspruch 1, dadurch gekennzeichnet, daß das polymerisierbare Material des einen oder beider Teile ein polymerisierbarer Acrylatestermonomer ist, aufgebaut nach der Formel

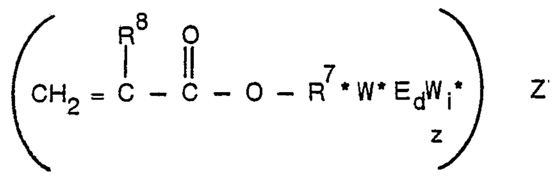 III.

wobei $R^8$ ausgewählt ist aus Wasserstoff, Chlor, Methyl- oder Äthylradikalen; $R^7$ ist ein zweiwertiges organisches Radikal ausgewählt aus niedrigem Alkylen von 1—8 Kohlenstoffatomen, Phenylen und Naphtylen; W ist ein Polyisozyanatradikal; E ist ein aromatisches, heterozyklisches oder zykloaliphatisches Polyol oder Polyaminradikal, ein Diol einer zykloaliphatischen Verbindung; d ist entweder 1 oder 0, i is dann 0, wenn d 0 ist, sonst ist es gleich oder um eins kleiner als die Anzahl der reaktiven Sauerstoffatome von E; Z ist ein (i) polymerisches oder kopolymerisches, gepfropftes Alkylenätherpolyolradikal oder (ii) ein polymeres oder kopolymeres Methylenätherpolyolradikal; z ist ein ganzes Vielfaches gleich der Wertigkeit von Z, wobei ein Stern eine Urethan (—NH—CO—O—) oder Ureid (—NH—CO—NH—) Verbindung anzeigt; Z kann auch ein polymeres oder kopolymeres Methylenätherpolyolradikal sein; oder

$$(A{-}X{-}CO.NH)_{n}B \qquad IV$$

wobei X —O— oder —$R^9N$= ist; $R^9$ ist ausgewählt aus H oder niederen Alkylen von 1 bis 7 Kohlenstoffatomen; A ist $CH_2{=}CR^{10}.CO.O$—; $R^{10}$ ist H oder $CH_3$; n ist ein ganzes Vielfaches von 2 bis 6 einschließlich; und B ist ein mehrwertiges substituiertes oder nichtsubstituiertes Alkyl, Alkenyl, Zykloalkyl, Aryl, Aralkyl, Alkyloxyalkylen, Aryloxyarylen oder ein heterozyklisches Radikal.

9. Klebstoffverbindung nach Anspruch 1, dadurch gekennzeichnet, daß das polymerisierbare Material des einen oder beider Teile ein polymerisierbares Acrylatestermonomer ist, dargestellt durch die Formel

$$(CH_2{=}CR^{11}.CO.O.R^{13}.O.CO.NH)_{2}R^{12} \qquad V$$

wobei $R^{11}$ H, $CH_3$, $C_2H_5$ oder Cl ist; $R^{12}$ ein $C_{2-20}$ Alkylen, Alkenylen oder Zykloalkylenradikal oder ein $C_{6-40}$ Arylen, Alkarylen, Aralkarylen, Alkyloxyalkylen oder Aryloxyarylenradikal ist, das durch 1—4 Chloratome oder durch 1—3 Amino- oder Mono- oder Di-$C_{1-3}$ Alkylamino- oder $C_{1-3}$ Alkoxy-Gruppen substituiert sein kann; $R^{13}$ ist eines der folgenden Verbindungen weniger ein Wasserstoffatom: (a) ein $C_{1-8}$ Hydroxyalkyl oder eine Aminoalkylgruppe, (b) eine $C_{1-6}$ Alkylamino-$C_{1-8}$ Alkylgruppe, oder (c) ein Hydroxyphenyl, ein Aminophenyl, ein Hydroxynaphthyl oder eine Aminonaphthylgruppe, die weiterhin substituiert sein kann durch ein Alkyl, eine Alkylamino- oder eine Dialkylaminogruppe, wobei jede Alkylgruppe in diesem Unterteil (c) bis zu drei Kohlenstoffatome aufweist.

10. Klebstoffverbindung nach Anspruch 1, dadurch gekennzeichnet, daß das polymerisierbare Material des einen oder beider Teile ein polymerisierbares Acrylatestermonomer nach der folgenden Formel ist:

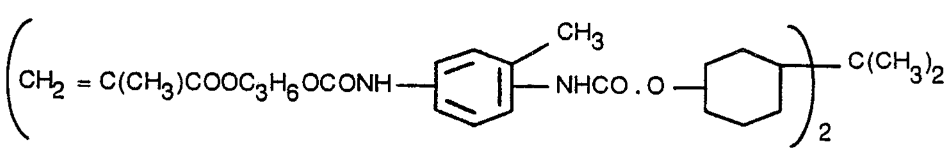 VI.

oder

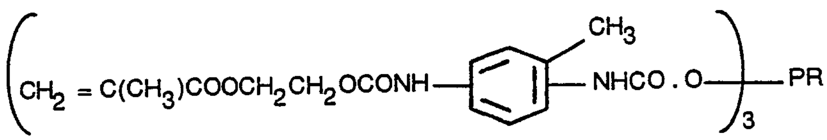

VII.

wobei PR einen Propylentriololigomer-Rest darstellt.

11. Verfahren zum Binden der Teile aneinander, gekennzeichnet durch

(1) Auftragen eines ersten Teiles eines zweiteiligen Klebstoffs auf eine erste Fläche;

(2) Auftragen eines zweiten Teiles eines zweiteiligen Klebstoffs auf eine zweite Fläche;

(3) Verbringen der beiden Flächen in Kontakt miteinander im Bereich der bestrichenen Fläche mit den entsprechenden Teilen der Klebstoffverbindung, wobei die Klebstoffverbindung enthält

(A) als ersten Teil ein Kunstharzsystem, enthaltend

(i) wenigstens ein polymerisierbares Acrylat oder Methacrylat;

(ii) ein Startersystem einer Frei-Radikal-Polymerisation, enthaltend

(a) eine Verbindung ausgewählt aus der Gruppe bestehend aus Peroxiden, Hydroperoxiden, Perestern, Persalzen oder Persäuren, ausgenommen aromatische Acylperoxide; und

(b) wenigstens ein aromatisches Acylperoxid;

(iii) wahlweise eine Säure mit einem pKa-Wert, der 6 nicht übersteigt; und

(B) als zweiten Teil ein Kunstharzsystem, enthaltend

(i) wenigstens ein polymerisierbares Acrylat oder Methacrylat;

(ii) ein Beschleunigersystem, enthaltend wenigstens ein Amin; und wahlweise entweder ein Sulfimid oder ein Hydrazinderivat, oder beides, wobei das Kunstharzsystem beider Teile bezüglich Viskosität und Rheologie im wesentlichen einander entspricht.

**Revendications**

1. Composition adhésive à deux composants, caractérisée par

(A) un premier composant constitué par un système résineux comprenant

(i) au moins un acrylate ou méthacrylate polymérisable;

(ii) un système initiateur de polymérisation à radicaux libres comprenant:

(a) un composé choisi parmi les peroxydes, hydroperoxydes, peresters, persels et peracides, sauf les peroxydes acryliques aromatiques, et

(b) au moins un peroxyde acylique aromatique;

(iii) éventuellement un acide dont le pKa n'excède pas 6;

(B) un second composant constitué par un système résineux comprenant

(i) au moins un acrylate ou méthacrylate polymérisable;

(ii) un système accélérateur comprenant une amine, de préférence une amine tertiaire, et éventuellement soit un sulfimide, soit un dérivé de l'hydrazine, soit les deux;

dans laquelle les systèmes résineux des deux composants ont des viscosités et des propriétés rhéologiques adaptées.

2. Composition adhésive selon la revendication 1, caractérisée par un ou plusieurs des points suivants:

(a) le composé (a) du système initiateur du premier composant est de l'hydroperoxyde de cumène;

(b) le composé (a) du système initiateur du premier composant est du t-butyl-perbenzoate;

(c) le sulfimide du système accélérateur du second composant et le dérivé de l'hydrazine du second composant sont respectivement de sulfimide benzoïque et de la 1-acétyle-2-phénylehydrazine; et

(d) l'acide du premier composant est de l'acide maleïque ou acrylique.

3. Composition adhésive selon la revendication 1, caractérisée par un ou plusieurs des points suivants:

(a) l'amine du système accélérateur du second composant est de la N,N-dihydroxy-éthyle-p-toluidine;

(b) l'amine du système accélérateur du second composant est de la N,N-dihydroxy-p-toluidine; et

(c) l'amine du système accélérateur du second composant est de la diméthyle-aniline.

4. Composition adhésive selon la revendication 1, caractérisée en ce que l'acrylate ou le méthacrylate polymérisable de l'un ou des deux composants est un monomère monofonctionnel et correspond à la formule

$$CH_2{=}\underset{\displaystyle R^1}{\underset{|}{C}}{-}COOR^2 \qquad \text{I}$$

dans laquelle $R^1$ est H, $CH_3$ ou un alcoyle de bas poids moléculaire, $R^2$ est H ou un groupe alcoyle, alcoyloxy, cycloalcoyle ou alcoylenyle.

5. Composition adhésive selon la revendication 4, caractérisée par un ou plusieur des points suivants:

(a) le monomère monofonctionnel est de l'hydroxypropyleméthacrylate;

(b) le monomère monofonctionnel est de l'hydroxyéthyleméthacrylate;

(c) le monomère monofonctionnel est du tétrahydro-furfurylεméthacrylate.

6. Composition adhésive selon la revendication 1, caractérisée en ce que le produit polymérisable de l'un ou des deux composants est un monomère polyfonctionnel et correspond à la formule

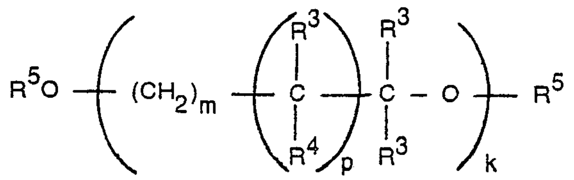

II.

dans laquelle $R^3$ est H, un alcoyle ou un hydroxyalcoyle en $C_{1-4}$ ou $R^5$—$OCH_2$—; $R^6$ est H, un atome d'halogène ou un groupe alcoyle en $C_{1-4}$; $R^4$ est H, OH ou $R^5$—O—; $R^5$ est $CH_2$=$CR^6$—C=O; m est un nombre entier de 1 à 8; k est un nombre entier de 1 à 20 et p est 0 ou 1.

7. Composition adhésive selon la revendication 6, caractérisée par un ou plusieurs des points suivants:

(a) le monomère polyfonctionnel est du diméthacrylate de polyéthylène glycol;

(b) le monomère polyfonctionnel est du diméthacrylate de tétraéthylène glycol;

(c) le monomère polyfonctionnel est du diméthacrylate de triéthylène glycol; et

(d) le monomère polyfonctionnel est du diméthacrylate de dipropylène glycol.

8. Composition adhésive selon la revendication 1, caractérisée par le fait que le produit polymérisable de l'un ou des deux composants est un monomère polymérisable d'ester acrylique représenté par la formule

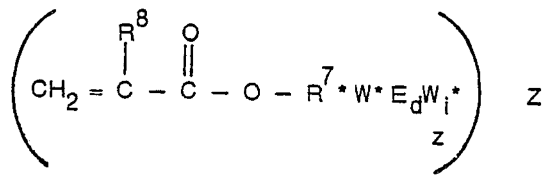

III.

dans laquelle $R^8$ est H, Cl ou un radical éthyle ou méthyle; $R^7$ est un radical organique bivalent choisi parmi les alcoylènes de bas poids moléculaire en $C_{1-8}$, les phénylènes et naphthylènes; W est un radical de polyisocyanate; E est un radical aromatique, hétérocyclique ou cycloaliphatique de polyol ou de polyamine, ou le diol d'un composé cycloaliphatique; d est soit 1 ou 0; i est 0 lorsque d est 0 et sinon égal au nombre des atomes d'hydrogène réactifs de E moins un; Z est soit (1) un radical polyol, polymérique ou copolymérique, d'éther d'alcoylène greffé, soit (2) un radical polyol, polymérique ou copolymérique, d'éther de méthylène; z est un nombre entier égal à la valeur de Z; l'astérisque indique un pont uréthane (—NH—CO—O—) ou ureïde (—NH—CO—NH—); Z peut aussi être un radical polyol, polymérique ou copolymérique d'ether de méthylène; ou

$$(A\text{—}X\text{—}CO.NH)_{n}B \qquad IV$$

dans laquelle X est —O— ou —$R^9$N—; $R^9$ est choisi parmi H ou des groupes alcoyles en $C_{1-7}$; A est $CH_2$=$CR^{10}$—CO—O—; $R^{10}$ est H ou $CH_3$; n est un nombre entier de 2 à 6 inclus; B est un radical substitué ou non, polyvalent, alcoyle, alcenoyle, cycloalcoyle, aroyle, aralcoyle, alcoyloxy-alcoylène, aroyloxy-aroylène ou hétérocyclique.

9. Composition adhésive selon la revendication 1, caractérisée en ce que le produit polymérisable de l'un ou des deux composants est un monomère polymérisable d'ester acrylique représenté par la formule

$$(CH_2{=}CR^{11}.CO.O.R^{13}.O.CO.NH)_{2}R^{12} \qquad V$$

dans laquelle $R^{11}$ est H, $CH_3$, $C_2H_5$ ou Cl; $R^{12}$ est un radical alcoylène, alcénoylène ou cycloalcoylène en $C_{2-20}$ ou un radical aroylène, alcaroylène, aralcaroylène, alcoyloxyalcoylène ou aroyloxyaroylène en $C_{6-40}$ qui peut être substitué par 1 à 4 atomes de chlore ou par 1 à 3 groupes amino ou mono- ou di-$C_{1-3}$-alcoylamino ou alcoxy en $C_{1-3}$; $R^{13}$ est l'un des groupes suivants moins un atome d'hydrogène:

(1) un groupe hydroxy-alcoyle ou aminoalcoyle en $C_{1-8}$; (2) un groupe $C_{1-6}$-alcoylamino-$C_{1-8}$-alcoyle; ou (3) un groupe hydroxyphényle, aminophényle; hydroxynaphthyle ou aminonaphthyle qui peut être de plus substitué par un groupe alcoyle, alcoylamino ou dialcoylamino, chaque groupe alcoyle du point (3) contenant jusqu'à 3 atomes de carbone.

10. Composition adhésive selon la revendication 1, caractérisée en ce que le produit polymérisable de l'un ou des deux composants est un monomère polymérisable d'ester acrylique représenté par la formule

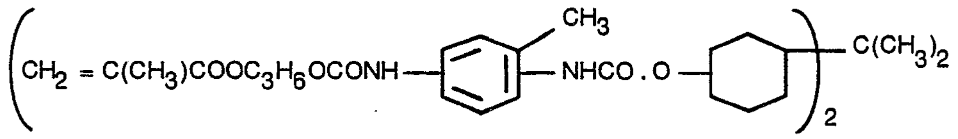 VI.

ou

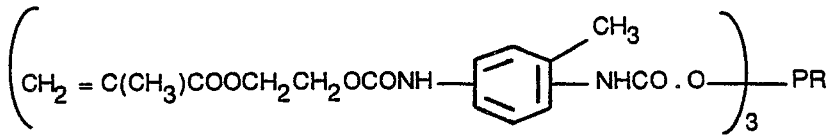 VII.

dans laquelle PR représente un reste oligomère de propylène triol.

11. Procédé pour lier des surfaces, caractérisé en ce

(1) que l'on revêt une première surface avec le premier composant d'un adhésif à deux composants;

(2) l'on revêt une deuxième surface avec le second composant d'un adhésif à deux composants;

(3) l'on met les deux surfaces en contact par leurs faces revêtues de chacun des composants de composition adhésive, celle-ci comprenant:

(A) un premier composant constitué par un système résineux comprenant

(i) au moins un acrylate ou méthacrylate polymérisable;

(ii) un système initiateur de polymérisation à radicaux libres comprenant:

(a) un composé choisi parmi les peroxydes, hydroperoxydes, peresters, persels et peracides, sauf les peroxydes acryliques aromatiques, et

(b) au moins un peroxyde acylique aromatique;

(iii) éventuellement un acide dont le pKa n'excède pas 6;

(B) un second composant constitué par un système résineux comprenant

(i) au moins un acrylate ou méthacrylate polymérisable;

(ii) un système accélérateur comprenant une amine, de préférence une amine tertiaire, et éventuellement soit un sulfimide, soit un dérivé de l'hydrazine, soit les deux, dans lesquels les systèmes résineux des deux composants ont des viscosités et des propriétés rhéologiques adaptées.